# EUROPEAN PATENT APPLICATION

(11) **EP 4 848 130 A2**
(43) Date of publication of application: **02.12.2026**
(21) Application number: 26182137.5
(22) Date of filing: 29.05.2026
(51) Int. Cl.: G06F 21/64, H04L 9/00, H04L 9/32

(54) **DISTRIBUTED LEDGER ACCESS**

(30) Priority: 30.05.2025 GB 202508497; 06.02.2026 GB 202602742
(71) Applicant: Polyblock Limited, London EC4A 2DQ (GB)
(72) Inventor: MOGHADAM, Hamidreza Vazir, London, EC4A 2DQ (GB)
(74) Representative: Keltie LLP

(57) **Abstract**

There is provided a distributed ledger configured to operate with efficient resource usage. The distributed ledger comprises a smart contract, the smart contract comprising a cryptographic commitment, the cryptographic commitment being a function of a secret, and a contract balance. The distributed ledger is configured to receive a read only verification query to return the value of the contract balance, provide response data, the response data comprising the value of the contract balance, receive a secret, and redeem the smart contract by submitting the secret to the smart contract, submission of the secret causing, in response to the secret satisfying the cryptographic commitment, the transfer of a transaction value to a provider account and self-deletion of the smart contract. The distributed ledger is further configured to provide access to a distributed ledger service of the distributed ledger, the distributed ledger service being associated with the provider account, wherein self-deletion of the smart contract causes release of resources on the distributed ledger.

## Description

### TECHNICAL FIELD

The present disclosure relates to a distributed ledger configured to act with efficient resource usage.

### BACKGROUND

Distributed ledgers (e.g. a blockchain) are databases that are shared across multiple nodes, i.e., are decentralised. Distributed ledgers have evolved from single-purpose cryptocurrency databases into general-purpose execution environments used by providers to provide different services such as decentralised finance (DeFi), tokenised real-world assets, non-fungible tokens (NFTs), and a myriad Web3-native business models.

Access to a distributed leger is typically mediated by a gateway service (also referred to as a node provider or RPC endpoint). A user (e.g. a software developer, analytics firm, custodial wallet, or institutional counterparty) requests access to a distributed ledger service on the distributed ledger via the gateway, and the gateway processes the request, granting or refusing access to the distributed ledger service. A gateway service may process billions of requests per day.

To be granted access to the distributed ledger service, a user typically provides a payment to the provider of the service. At present, there are various methods that are used to manage these transactions at the gateway, and thus manage access to the distributed ledger.

One method of managing transactions uses bearer tokens (APl-keys) or IP-based quotas, where having ownership of a particular token gives a user access to a particular service. Use of the service over a set time period, e.g. a month, is tracked using the bearer tokens, and then an invoice for the use of the service is issued and settled later after the set time period. There is therefore a latency mismatch between resource consumption (i.e. access to the service) and revenue realisation, exposing service providers to credit risk while imposing capital-inefficient pre-funding or collateral requirements on clients. Additionally, as the ownership of bearer tokens are tracked over time, with transfers of ownership being recorded on the distributed ledger, using bearer tokens to manage access to a service uses a high amount of storage resources on the distributed ledger. On-chain storage is expensive, and also limited.

In some cases, probabilistic micropayments may be used to manage user access to a service on a distributed ledger. In conventional micropayments, for each access request (e.g. to a service on a distributed ledger, via a gateway), a small payment is made, and recorded as a transaction on the distributed ledger. Recording the transactions in this way uses high amounts of on-chain storage. However, probabilistic micropayments require a reduced amount of on-chain storage compared to conventional micropayments, because instead of a payment being made and recorded for every access request, each request includes a probability of being worth a full payment (an amount larger than a payment that would be due in conventional micropayments, where a user pays per request). That is, each access request will either be worth zero, or the full payment. For example, if a service provider charges 1p for each request, then the request may include a probability of being a full payment of £1, and each request will either be worth zero or £1. Only 'winning tickets' (i.e. requests worth the full payment) are settled on the distributed ledger. That is, when the request is worth the full payment, the transaction is recorded and the provider receives the full payment from the user. However, when the request is worth zero i.e., is not worth the full payment, then no transaction is recorded and the provider does not receive payment for access to the service. While probabilistic micropayments reduce storage resources on the distributed ledger, due to a reduced number of transactions being recorded, probabilistic micropayments require persistent tracking of requests, redemption states, and randomness inputs, which does require long-term storage on the distributed ledger. Additionally, due to the randomness of the transactions being recorded, probabilistic micropayments result in irregular, high-cost transactions, leading to unpredictable gas usage and inefficient utilisation. This method of managing access may also be considered unfair, as a user may overpay for the number of access requests they submit, and the provider is not guaranteed payment for the service provided. Probabilistic micropayments are also highly complex, and the variance complicates accounting.

Another method for managing user access to a service on a distributed ledger uses state channels, which are private, off-chain communication channels between two parties (the user and the service provider). When using state channels, the transaction (i.e., the payment) is carried out using the state channel, and thus not on the distributed ledger, reducing storage requirements on the distributed ledger. However, using state channels requires a persistent, off chain state. That is, the state of the channel must be continually stored by both parties throughout the channel's operation because if a dispute occurs, the latest valid state must be submitted on-chain. This requires parties to have persistent reliable storage, and since the state channel may run for long periods of time, the storage burden on parties can be extremely high. Additionally, both parties should remain online and responsive during transactions via a state channel, because if one party tries to cheat by submitting an old state on-chain, the other party must respond within a challenge period to present the latest state. If a party is offline and misses this window, they could lose money. Any disputes between parties are also resolved on-chain, and dispute resolution logic has high computational expense.

An objective of the present invention is therefore to overcome at least one of the limitations described above.

### SUMMARY OF THE INVENTION

According to a first aspect of the present invention, there is provided a distributed ledger. The distributed ledger comprises a smart contract, the smart contract comprising a cryptographic commitment, the cryptographic commitment being a function of a secret, and a contract balance. The distributed ledger is configured to receive a read only verification query to return the value of the contract balance, provide response data, the response data comprising the value of the contract balance, receive the secret, and redeem the smart contract by submitting the secret to the smart contract, submission of the secret causing, in response to the secret satisfying the cryptographic commitment, the transfer of a transaction value to a provider account and self-deletion of the smart contract. The distributed ledger is further configured to provide access to a distributed ledger service, the distributed ledger service being associated with the provider account, wherein self-deletion of the smart contract causes release of resources on the distributed ledger.

The distributed ledger service may be a distributed ledger service of the distributed ledger comprising the smart contract. That is, the distributed ledger may comprise the smart contract and provide the distributed ledger service. In other embodiments, the distributed ledger service may be provided by a second distributed ledger, in communication with the distributed ledger, in a cross-chain system, as is described in detail herein.

The distributed ledger according to the first aspect of the present invention provides an energy efficient mechanism for accessing resources on the ledger. The ledger is configured to receive a read only verification query for a contract balance in a smart contract deployed on the distributed ledger. The verification query may be received from a gateway. Using a smart contract means that settlement, i.e., transfer of the transaction value to a provider account, occurs synchronously with execution of the access request. That is, the distributed ledger uses atomic settlement, which eliminates the need for deferred accounting and eliminates credit risk. Additionally, automatic self-deletion of the smart contract after it is redeemed allows for stateless operation, where the nodes of the distributed ledger are not required to store the entire state of the transaction. This frees storage resources on the distributed ledger, reducing gas use and supporting scalability. Thus, the self-deletion of the smart contract, which causes release of resources on the distributed ledger, means that the distributed ledger is configured to operate with efficient resource usage.

Smart contracts may be single use or multi-use. In single use smart contracts, when the contract balance is a value equal to the transaction value, the entire contract balance may be transferred to the provider account when the smart contract is redeemed. That is, the smart contract may be fully redeemed and the smart contract may execute self-deletion following the full redemption. In single use smart contracts, when the contract balance is greater than the transaction value, an amount less than the contract balance may be transferred to the provider account when the smart contract is redeemed. In such cases, the remaining balance may be refunded to a user account, and the smart contract then executes self-deletion. In multi-use smart contracts, the contract balance may be greater than the transaction value, and thus an access request may result in partial redemption of the smart contract. That is, an amount less than the contract balance may be transferred to the provider account. In such embodiments, the smart contract may execute self-deletion once the contract balance is zero, or falls below a predefined threshold (e.g. below the transaction value). Thus, the self-deletion may occur after a plurality of partial redemptions.

The distributed ledger may be Ethereum.

The distributed ledger may be configured to receive the secret from a second distributed ledger via a cross-chain messaging protocol.

The distributed ledger may be configured to receive the secret from a gateway associated with the distributed ledger, or a user device.

The smart contract may comprise a validity period.

To redeem the smart contract, the distributed ledger may be configured to cause the transfer of the transaction value to the provider account in response to the secret being submitted within the validity period.

The distributed ledger may be configured to cause the transfer of the contract balance to a user account when the secret is not submitted within the validity period.

The validity period thus enables a user device to be refunded in the event that the secret is not submitted within a defined time period. The validity period therefore ensures the user device recovers the contract balance in the event of any failures, for example network failures. Additionally, using a validity period prevents replay or double-spend, making transactions more secure.

The smart contract may be deployed on the distributed ledger using an opcode or mechanism that enables deterministic calculation of the address of the smart contract.

Using deterministic calculations allows the address of the smart contract to be calculated in advance, supporting caching and integration with infrastructure (e.g. gateway infrastructure).

The distributed ledger may be configured to log events carried out by the smart contract.

Logging events, such as state transitions of the smart contract (deployment, redemption, refund) on the distributed ledger ensures verifiable and immutable audit trails that can be reconstructed without reliance on off-chain records.

According to a second aspect of the present invention, there is provided a gateway for managing access to a distributed ledger service on a distributed ledger, the distributed ledger service being associated with a provider account. The gateway is configured to receive, from a user device, a request for access to the distributed ledger service. The request comprises a secret and an address of a smart contract deployed on the distributed ledger. The smart contract comprises a cryptographic commitment, the cryptographic commitment being a function of the secret, and a contract balance, wherein the smart contract is configured to self-delete after redemption of the smart contract. The gateway is further configured to execute a read-only verification query of the smart contract to determine the contract balance, in the event that the value of the contract balance is greater than or equal to a threshold value set by the provider account, redeem the smart contract by submitting the secret to the smart contract, submission of the secret causing, in response to the secret satisfying the cryptographic commitment in the smart contract, the transfer of a transaction value to the provider account and self-deletion of the smart contract. The gateway is further configured to grant the user device access to the distributed ledger service.

As described previously, the smart contract is configured to automatically self-delete following redemption, freeing up storage space on the distributed ledger, and reducing gas use. As a result, the gateway is able to efficiently process many access requests, making the system more scalable.

The request may comprise a cryptographic commitment, and the gateway may be configured to execute the read-only verification query to determine if the cryptographic commitment in the request matches the cryptographic commitment in the smart contract.

Including the commitment in the access request provides an additional filter at the gateway, before redemption of the smart contract. Using the commitment, the gateway filters out access requests that are malformed or replayed, without relying only on reading the contract balance of the smart contract. This reduces the risk of accidental or malicious association of an access request with an incorrect smart contract address, and also strengthens stateless verification by ensuring the request explicitly binds to the intended smart contract.

The transaction value may be equal to the contract balance. In such embodiments, the smart contract is fully redeemed on transfer of the transaction value to the provider account. The smart contract then automatically executes self-deletion.

The transaction value may be less than the contract balance, and redemption may comprise a plurality of redemption messages until the contract balance is zero or less than the transaction value, the smart contract being configured to self-delete once the contract balance is zero or less than the transaction value.

The smart contract may comprise a validity period, and the gateway may be configured to execute the read-only verification query to determine that the validity period has not expired, and redeem the smart contract in response to submitting the secret within the validity period.

The gateway may be configured to block access to the distributed ledger service in response to the secret not being submitted within the validity period.

The smart contract may be configured to cause a transfer of the transaction value to a user account associated with the user device in response to the secret not being submitted within the validity period.

Enabling an automatic refund to the user device in response to the secret not being submitted within the validity period makes the system more secure, and more tolerant to any failures.

The gateway may be configured to select the validity period based on a service level agreement tier.

The cryptographic commitment may be a hash of the secret under a hash function selected from Keccak-256, SHA-3, Poseidon, or BLAKE3.

The gateway may be configured to send response data to the user device in response to the verification.

According to a third aspect of the present invention, there is provided a gateway for managing access to a distributed ledger service on a first distributed ledger, the distributed ledger service being associated with a provider account. The gateway is configured to receive, from a user device, a request for access to the distributed ledger service. The request comprises an address of a smart contract deployed on the first distributed ledger, the smart contract comprising a cryptographic commitment, the cryptographic commitment being a function of a secret, and a contract balance, wherein the smart contract is configured to self-delete after redemption of the smart contract. The gateway is further configured to execute a read-only verification query of the smart contract to determine that the value of the contract balance is greater than or equal to a threshold value set by the provider account, provide response data to the user device, the response data comprising confirmation of verification, wherein the response data causes the user device to submit a secret to a second distributed ledger service, and grant the user device access to the distributed ledger service in response to redemption of the smart contract, wherein the smart contract is redeemed by submission of the secret by the second distributed ledger to the smart contract on the first distributed ledger, submission of the secret causing, in response to the secret satisfying the cryptographic commitment in the smart contract, the transfer of a transaction value to the provider account and self-deletion the smart contract.

The third aspect of the present invention is distinguished from the second aspect of the present invention because in the third aspect of the present invention, the secret is not included in the request. Instead, the secret is provided to a second distributed ledger, which is in communication with the first distributed ledger. The second distributed ledger then submits the secret to the smart contract on the first distributed ledger, for example using a cross-chain communication protocol.

According to a fourth aspect of the present invention, there is provided a gateway for managing access to a distributed ledger service on a first distributed ledger, the distributed ledger service being associated with a provider account. The gateway is configured to receive, from a user device, a request for access to the distributed ledger service, the request comprising an address of a smart contract deployed on a second distributed ledger, the smart contract comprising a cryptographic commitment, the cryptographic commitment being a function of a secret, and a contract balance, wherein the smart contract is configured to self-delete after redemption of the smart contract. The gateway is further configured to execute a read-only verification query of the smart contract to determine that the value of the contract balance is greater than or equal to a threshold value set by the provider account, provide response data to the user device, the response data comprising confirmation of verification, wherein the response data causes the user device to submit a secret to the first distributed ledger, and grant the user device access to the distributed ledger service in response to redemption of the smart contract, wherein the smart contract is redeemed by submission of the secret by the first distributed ledger to the smart contract on the second distributed ledger, submission of the secret causing, in response to the secret satisfying the cryptographic commitment in the smart contract, the transfer of a transaction value to the provider account and self-deletion the smart contract.

The fourth aspect of the present invention is distinguished from the third aspect of the present invention by providing the smart contract on a different distributed ledger to the ledger providing the distributed ledger service. That is, in the third aspect of the invention, the distributed ledger service is on the first distributed ledger, and the smart contract is also deployed on the first distributed ledger, while in the fourth aspect of the invention, the distributed ledger service is on the first distributed ledger, but the smart contract is deployed on a second distributed ledger.

According to a fifth aspect of the present invention, there is provided a system comprising the distributed leger according to the first aspect of the present invention and the gateway according to the second aspect of the present invention, the third aspect of the invention, or the fourth aspect of the invention.

According to a sixth aspect of the present invention, there is provided a method of operating a distributed ledger, the distributed ledger comprising a smart contract. The smart contract comprises a cryptographic commitment, the cryptographic commitment being a function of a secret, and a contract balance. The method comprises receiving a read only verification query to return the value of the contract balance, providing response data, the response data comprising the value of the contract balance, receiving a secret, redeeming the smart contract by submitting the secret to the smart contract, submission of the secret causing, in response to the secret satisfying the cryptographic commitment, the transfer of a transaction value to a provider account and self-deletion of the smart contract, and providing access to a distributed ledger service of the distributed ledger, the distributed ledger service being associated with the provider account, wherein self-deletion of the smart contract causes release of resources on the distributed ledger.

Self-deletion of the smart contract thus results in the distributed ledger operating with efficient resource usage.

According to a seventh aspect of the present invention, there is provided a method of operating a gateway configured to manage access to a distributed ledger service, the distributed ledger service being associated with a provider account. The method comprises receiving, from a user device, a request for access to the distributed ledger service. The request comprises a secret and an address of a smart contract deployed on the distributed ledger. The smart contract comprises a cryptographic commitment, the cryptographic commitment being a function of the secret, and a contract balance, wherein the smart contract is configured to self-delete after redemption of the smart contract. The method further comprises executing a read-only verification query of the smart contract to determine the contract balance, and in the event that the value of the contract balance is greater than or equal to a threshold value set by the provider account, redeeming the smart contract by submitting the secret to the smart contract, submission of the secret causing, in response to the secret satisfying the cryptographic commitment, the transfer of a transaction value to the provider account and self-deletion of the smart contract. The method further comprises granting the user device access to the distributed ledger service.

According to a eighth aspect of the present invention there is provided a smart contract for deployment on a distributed ledger. The smart contract comprises a cryptographic commitment, the cryptographic commitment being a function of a secret, and a contract balance. The smart contract is redeemed by submitting the secret to the smart contract, submission of the secret causing, in response to the secret satisfying the cryptographic commitment, the transfer of a transaction value to a provider account and self-deletion of the smart contract, wherein self-deletion of the smart contract causes release of resources on the distributed ledger.

According to a ninth aspect of the present invention, there is provided a method of configuring a smart contract for deployment on a distributed ledger. The method comprises generating a secret, determining a cryptographic commitment, wherein the cryptographic commitment is a function of the secret, and submitting a request to a smart contract factory to deploy a smart contract on the distributed ledger, wherein the request comprises the cryptographic commitment, an address of a provider of a distributed ledger service, and a contract balance, wherein in response to the request, the smart contract factory deploys the smart contract on the distributed ledger. The smart contract comprises the cryptographic commitment and the contract balance. The smart contract is redeemed by submitting a secret to the smart contract, submission of the secret causing, in response to the secret satisfying the cryptographic commitment, the transfer of a transaction value to the provider and self-deletion of the smart contract, wherein self-deletion of the smart contract causes release of resources on the distributed ledger.

According to a tenth aspect of the present invention, there is provided a gateway for managing access to a distributed ledger service on a first distributed ledger, the distributed ledger service being associated with a provider account, wherein the gateway is configured to: receive, from a user device, a request for access to the distributed ledger service, the request comprising: an address of a smart contract, the smart contract comprising a cryptographic commitment, the cryptographic commitment being a function of a secret; and a contract balance, wherein the smart contract is configured to self-delete after redemption of the smart contract; execute a read-only verification query of the smart contract to determine that the value of the contract balance is greater than or equal to a threshold value set by the provider account; provide response data to the user device, the response data comprising confirmation of verification, wherein the response data causes the user device to submit a secret to a second distributed ledger service; and grant the user device access to the distributed ledger service in response to redemption of the smart contract, wherein the smart contract is redeemed by submission of the secret to the smart contract, submission of the secret causing, in response to the secret satisfying the cryptographic commitment in the smart contract, the transfer of a transaction value to the provider account and self-deletion the smart contract.

The smart contract may be deployed on either the first or second distributed ledgers.

According to a further aspect of the present invention there is provided a computer program comprising instructions which, when the program is executed by a computer, cause the computer to carry out the method of the sixth, seventh or ninth aspects of the present invention.

According to another aspect of the present invention there is provided a computer-readable storage medium comprising instructions which, when executed by a computer, cause the computer to carry out the method of the sixth, seventh or ninth aspects of the present invention.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

Specific embodiments of the invention will now be described, by way of example only, with reference to the accompanying drawings, of which:
**Figure 1** is a block diagram showing a system for managing access to a distributed ledger service on a distributed ledger, in accordance with embodiments of the present invention;
**Figure 2** is a state flow diagram showing different states of a smart contract, in accordance with embodiments of the present invention;
**Figure 3** is a flowchart showing a method for generating an access request for accessing a service on a distributed ledger, in accordance with embodiments of the present invention;
**Figure 4** is a flowchart showing a method for processing an access request, in accordance with embodiments of the present invention;
**Figure 5** is a flowchart showing a method for providing a distributed ledger service in accordance with embodiments of the present invention;
**Figure 6** is a sequence diagram for creation, verification, redemption and self-destruction of a single use smart contract, in accordance with embodiments of the present invention;
**Figure 7** is a schematic diagram showing an example redemption process for a multi-use smart contract, in accordance with embodiments of the present invention;
**Figure 8** is a graph showing gas use per access request for four different distributed ledgers implementing the system of **Figure 1****;**
**Figure 9** is a block diagram showing a cross-chain system for managing access to a distributed ledger service on a distributed ledger, in accordance embodiments of the present invention;
**Figure 10** is a flowchart showing a method for managing access to a distributed ledger, performed by the cross-chain system of **Figure 9****;** and
**Figure 11** is a block diagram showing a cross-chain system for managing access to a distributed ledger service on a distributed ledger, in accordance with an alternative embodiment of the present invention.

### DETAILED DESCRIPTION

Prior to setting forth embodiments of the present invention, a number of definitions are provided that will assist in the understanding of the invention.

A "distributed ledger" is a decentralised database that is shared across multiple nodes. A blockchain is an example of a distributed ledger.

A "distributed-ledger service" refers to a function or data feed exposed by a distributed ledger.

A "gateway server", or "gateway service", referred to as a "gateway" throughout the following description, is a node that receives and processes requests to a distributed ledger. The gateway manages access to the distributed ledger.

A "smart contract" is a program or protocol that automatically enforces terms of an agreement when predefined conditions are met.

Turning to the present invention, embodiments of the present invention provide a method for managing access to a distributed ledger service on a distributed ledger. A gateway receives, from a user device, a request for access to the service, and communicates with the distributed ledger to manage access to the service. The distributed ledger comprises a smart contract comprising a cryptographic commitment. Redemption of the smart contract is caused by submission of a secret by the user device, where the secret satisfies the cryptographic commitment. Redemption causes transfer of a transaction value to a provider providing the distributed ledger service. The transfer of the transaction value to the provider grants the user device access to the service. Accordingly, transfer of the transaction value occurs synchronously with execution of the access request.

In a single use smart contract, once the smart contract is redeemed (i.e., the contract balance has been transferred or refunded), the smart contract executes a self-deletion function, which releases resources on the distributed ledger. In multi-use smart contracts, self-deletion occurs when the contract balance is zero, or less than a predefined threshold. The self-deletion function of the smart contract also means that there is no state growth of the distributed ledger. In this way, the method of the present invention does not require high amounts of storage on the distributed ledger, and thus gas use is reduced. Accordingly, the method of the present invention is scalable, and able to cope with billions of access requests.

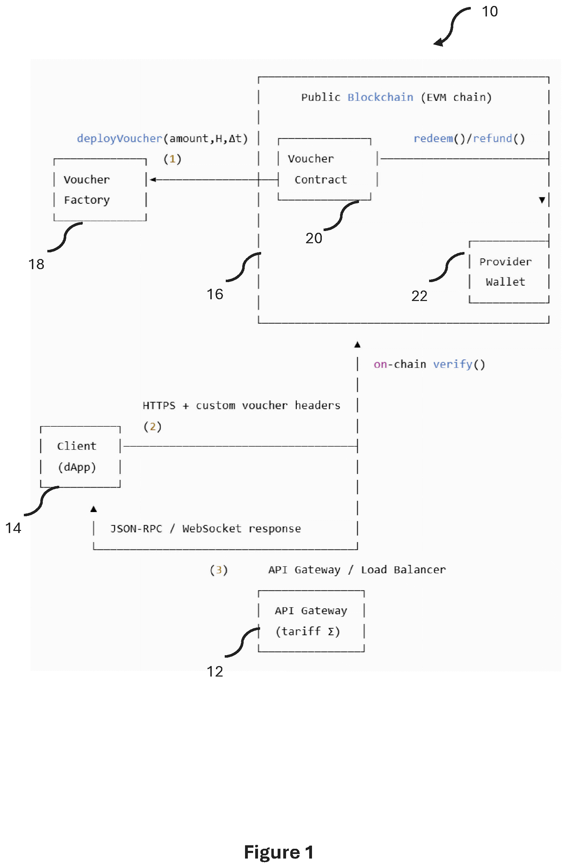

**Figure 1** is a block diagram showing a system 10 for managing access to a distributed ledger, in accordance with embodiments of the present invention. As illustrated the system 10 comprises a gateway 12, which is in communication with a user device (client device) 14 and a distributed ledger 16. An example of a distributed ledger is the public blockchain Ethereum (EVM), which is shown in **Figure 1****,** however the distributed ledger 16 may be any type of distributed ledger, for example Polygon, BSC, and Optimism. The system 10 also comprises a smart contract factory 18, which is configured to generate and deploy smart contracts on the distributed ledger 16. An example smart contract 20 deployed on the distributed ledger 16 is shown in **Figure 1. Figure 1** also illustrates a provider account 22 on the distributed ledger 16 (shown as a provider wallet). Providers offer distributed ledger services on the distributed ledger 16, for example DeFi, tokenised real-world assets, NFTs, and myriad Web3-native business models. The provider account 22 is associated with a distributed ledger service provided on the distributed leger 16.

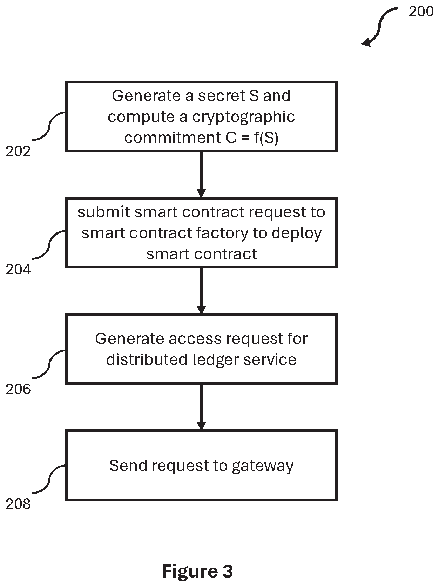

Prior to requesting access to a distributed ledger service of the distributed ledger 16, a smart contract 20 is deployed on the distributed ledger 16 using a smart contract request. The user device 14 (or a software development kit (SDK) associated with the user device 14) firstly sends a request to (calls) the smart contract factory 18 to create the smart contract 20. The smart contract request comprises a contract balance, a cryptographic commitment, and an address of the provider account 22 on the distributed ledger 16. In order to gain access to the service, the contract balance has a value greater than or equal to a threshold value needed to access the service. The threshold value is set by the provider account 22. The cryptographic commitment comprises a value that is satisfied by revelation of a corresponding secret. That is, a value equal to a function of the secret. For example, the cryptographic commitment may be a hash-lock, Merkle root, or zero-knowledge proof. The secret and corresponding commitment are discussed in more detail later with reference to **Figure 3****.** In some embodiments, the smart contract request from the user device 14 also comprises a validity period (also discussed in more detail later).

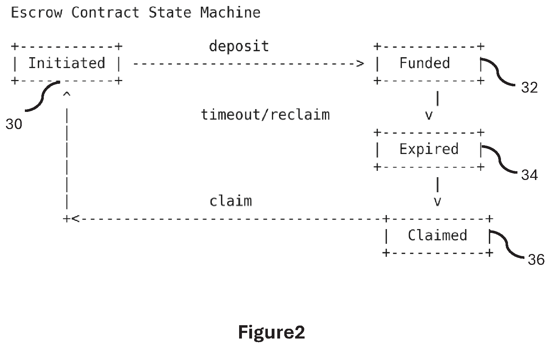

Smart contracts can exist in multiple states, as shown by the state flow diagram of **Figure 2****.** The smart contract 20 may be in an initiated state 30 (e.g., in response to a smart contract request to a smart contract factory 18). The smart contract 20 is in a funded state 32, when it is funded by an amount specified in the smart contract request from the user device 14. The smart contract 20 is in the funded state 32 when deployed on the distributed ledger 16. The smart contract may be in an expired state 34, when the smart contract can no longer be used. The smart contract 20 may enter the expired state if, for example, access to a service associated with the smart contract 20 is not requested within a predefined time period. The smart contract may also be in a claimed state 36, which occurs in response to the smart contract 20 being redeemed.

Returning to **Figure 1****,** in response to the smart contract request from the user device 14, the smart contract factory 18 generates the smart contract 20 comprising the contract balance, the cryptographic commitment, and the address of the provider account 22. The smart contract factory 18 deploys the smart contract 20 on the distributed ledger 16. In some embodiments, deployment is routed through a factory contract. A factory contract is a smart contract template that deploys smart contracts deterministically, i.e., allows the address of the smart contract on the distributed ledger 16 to be calculated in advance. The process of deterministic deployment of smart contracts would be known to someone skilled in the art, and so is not described in detail herein. Briefly, the deterministic deployment allows the address of the smart contract 20 to be predicted off-chain in advance. For example, in the illustrated embodiment, when the distributed ledger is Ethereum, a CREATE2 function can be used to compute the address of the smart contract in advance using the formula:$voucher adress = keccak 256 \left(0\times FF\left‖factory\right‖\left.salt\right‖bytecode\right)$ By using the deterministic computation of the smart contract address, the user device 14 and the gateway 12 have the address of the smart contract in advance, before the smart contract 20 is deployed on the distributed ledger 16).

Returning to **Figure 1****,** the user device 14 then sends an access request to the gateway 12. The access request comprises the address of the smart contract 20 on the distributed ledger 16, and a secret. The gateway 12 processes the access request, and based on the access request, grants or refuses access to the distributed ledger service for the user device 14.

The process of generating the access request, and the subsequent processing of the access request, that is the methods performed by the user device 14, the gateway 12, and the distributed ledger 16, are discussed in detail below with reference to **Figures 3** to **5****.**

Considering firstly **Figure 3, Figure 3** is a flowchart showing a method 200 for generating an access request for accessing a service on a distributed ledger, in accordance with an embodiment of the present invention. The method 200 may be performed by the user device 14 of **Figure 1****.**

The method 200 comprises firstly generating, at Step 202, a secret s and computing a corresponding cryptographic commitment C. The secret s may be a string of bytes, for example a 32-byte code. The secret s is selected at random by the user device 14.

As mentioned previously, the cryptographic commitment C is a value equal to a function of the secret. Thus, the commitment C is determined by computing a function of the secret, C = *f(s).* In some embodiments, the function is a hash-lock, and so computing the cryptographic commitment C comprises computing the hash-lock of the secret.

Returning to **Figure 3****,** the method 200 also comprises submitting, at Step 204, a smart contract request to deploy a smart contract on the distributed ledger. As described above, the smart contract request may be submitted to a smart contract factory (e.g. the smart contract factory 18 of **Figure 1****).** The smart contract request comprises the commitment C and a contract balance. The contract balance is greater than a threshold value needed to access the service, where the threshold value is set by a provider account associated with the service (e.g. provider account 22 of **Figure 1****).** The smart contract request also comprises an address of the provider account 22 (referred to as provider address for readability).

In some embodiments, the smart contract request also comprises a validity period Δt. The validity period Δt is defined as the time between deployment of the smart contract 20 on the distributed ledger 16, and redemption of the smart contract. The validity period Δt is chosen by the user device 14, and included in the smart contract request to the smart contract factory. The validity period Δt chosen is dependent on the application and use case. In some embodiments, the validity period Δt is 750 milliseconds, however any appropriate time period may be used.

The validity period Δt is a time period within which redemption of the smart contract must occur, in order for access to the service to be granted. If redemption does not occur within the validity period, the smart contract executes a self-deletion function (described later), and the contract balance is refunded to the user device 14. Inclusion of a validity period Δt in the smart contract 20 therefore prevents replay or double spends, and also ensures the user device 14 recovers the contract balance in the event of network disruption or failure of the gateway 12.

As illustrated in **Figure 3****,** the method 200 then comprises generating, at Step 206, an access request. The access request comprises the secret s and optionally the commitment C. The address of the smart contract 20 on the distributed ledger 16 is also included in the access request. The address of the smart contract 20 may be embedded in a metadata field of the access request. For example, the access request may comprise internet protocols such as a HTTP header, a WebSocket sub-protocol, or gRPC metadata, each of which define a format which may be used to embed the address of the smart contract 20. Due to the deterministic deployment of the smart contract 20 (described above), the address of the smart contract 20 on the distributed ledger 16 is known in advance, and so can be included in the access request.

The method 200 further comprises sending, at Step 208, the access request to a gateway.

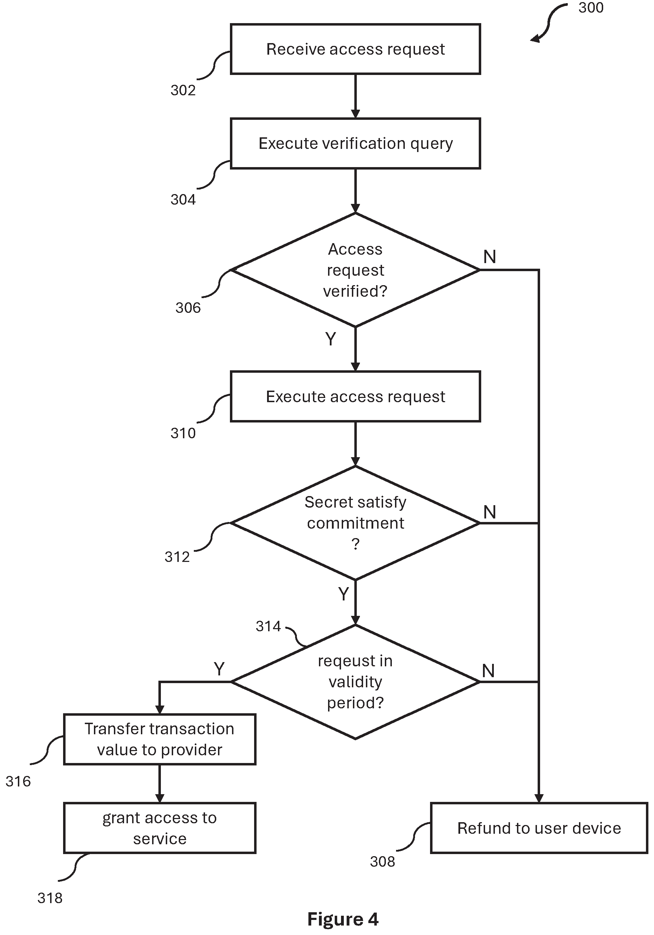

**Figure 4** is a flowchart showing a method of processing an access request, and thus a method 300 for managing access to a distributed ledger service on a distributed ledger, according to embodiments of the present invention. The method 300 may be carried out by the gateway 12 of **Figure 1****.**

The method 300 comprises receiving, at Step 302, an access request. The access request was described with reference to **Figure 3****,** and may be received from a user device, e.g. the user device 14 of **Figure 1****.** The method 300 then comprises executing, at Step 304, a verification query. Executing the verification query comprises performing a read-only query of the smart contract 20 to determine the contract balance. Using a read-only verification query contributes to the low storage requirements of the method of the present invention, because the verification does not occur on the distributed ledger itself, it occurs off-chain.

Once the contract balance has been read, the method 300 comprises determining, at Step 306, if the access request is verified. Determining if the access request is verified comprises determining if the contract balance is equal to or greater than a threshold value needed to access the distributed ledger service (the threshold value being set by the provider associated with the service). If the contract balance is less than the threshold value, then the access request is not verified, and the method comprises refunding, at Step 308, the contract balance to the user device. That is, a refund function becomes available and is executed to transfer the contract balance to the user device. Once the refund function becomes available, the function may be called by the user device or by the provider of the service to trigger the refund to the user device 14. If, at Step 306, the contract balance determined by the read-only query of the smart contract is equal to or greater than the threshold value, then the access request is determined to be verified.

As mentioned previously, in some embodiments the access request also comprises the commitment C. In such embodiments, executing the verification query may comprise performing a read-only query of the smart contract to determine the commitment C stored in the smart contract. In such embodiments, determining, at Step 306, if the access request is verified comprises determining if the commitment in the access request matches the commitment in the smart contract. Including the commitment in the access request provides an additional early filter at the gateway 12, where access requests that are malformed or replayed are rejected immediately, without requiring a read of the contract balance. Thus, the gateway 12 applies a first, computationally cheap filter, that reduces the risk of accidental or malicious association of a request with an incorrect smart contract address. Including the commitment in the access request also strengthens stateless verification by ensuring the request explicitly binds to the intended voucher parameters.

Returning to **Figure 4****,** if the access request is determined, at Step 306, to be verified, the method comprises executing, at Step 310, the access request. Executing the access request comprises submitting the secret to the smart contract 20 on the distributed ledger 16. The secret is comprised in the access request received by the gateway (described above), and thus the gateway submits the secret to the smart contract.

The method 300 further comprises determining, at Step 312, if the secret s satisfies the commitment C. That is, if the function of the secret, e.g. a hash-lock of the secret, matches the value of the commitment stored in the smart contract 20. If the method determines, at Step 312, that the secret s does not satisfy the commitment C, (e.g. the hash-lock of the secret is not the same as the value stored as C in the smart contract), then the method 300 proceeds to Step 308, and refunds the contract balance to the user device 14. Access to the distributed ledger service is not granted to the user device 14.

If, however, the secret s is determined, at Step 312, to satisfy the commitment C, the method 300 comprises transferring, at Step 316, a transaction value to the provider of the service. The transaction value is an amount set by the provider that is needed to access the service, i.e., the cost of accessing the service. The transaction value may be equal to the contract balance, or less than the contract balance. Transfer of the transaction balance is referred to as redemption of the smart contract. When the transaction value is equal to the contract balance, the smart contract is fully redeemed on transfer of the transaction value to the provider.

As described above, in some embodiments the access request comprises a validity period Δt. In such embodiments, the method 300 may comprise an additional step, that occurs prior to the transfer of the transaction value at Step 316. As illustrated in **Figure 4****,** the method 300 may optionally comprise determining, at Step 314, if the redemption of the smart contract occurred within the validity period Δt. If redemption does not occur within the validity period, i.e., the secret is not submitted within the validity period (the time between deployment of the smart contract and submission of the secret is greater than the validity period), then the method proceeds to Step 308, and refunds the contract balance to the user device 14. That is, if the secret is not submitted within a predefined time period, the contract balance is automatically refunded to the user device 14, making the system more secure and tolerant to failures.

If the secret is determined, at Step 314, to be submitted within the validity period (the time between deployment of the smart contract and submission of the secret is less than the validity period), the method proceeds to Step 316, and comprises transferring the transaction value to the provider of the service.

Following transfer of the transaction value to the provider, the method comprises granting, at Step 318, the user device access to the distributed ledger service. Granting access to the user device may comprise, for example, providing data from the distributed ledger service to the user device 14.

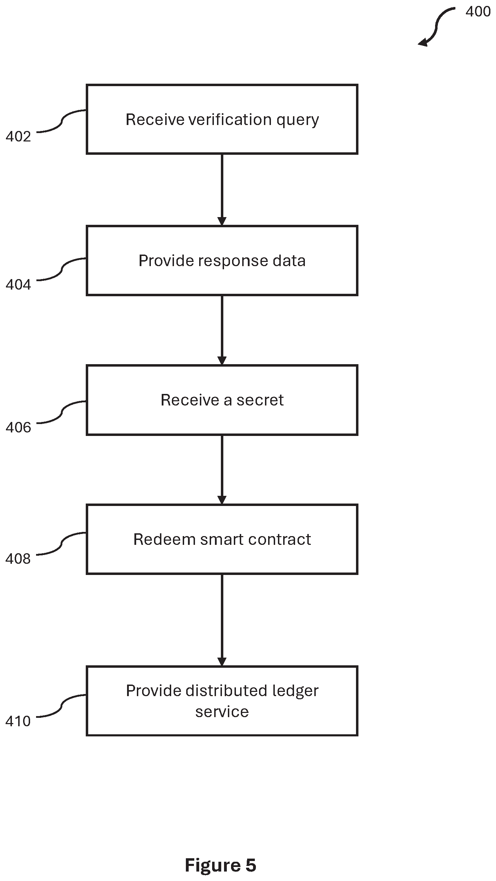

After access to the distributed ledger service is granted to the user device 14 (Step 318) or after the contract balance is refunded to the user device 14 (Step 308), the smart contract executes state deletion. State deletion of the smart contract 20 ensures stateless operation and prevents reuse. State deletion of the smart contract is described in more detail with reference to **Figure 5****,** which describes a method 400 for providing a distributed ledger service. The method may be performed at the distributed ledger 16 of **Figure 1****.**

As illustrated, the method 400 comprises receiving, at Step 402, a read-only verification query. The verification query may be received from the gateway 12, as described previously. The verification query may be sent by the gateway in response to a request to check that the contract balance is greater than or equal to a threshold value. As described previously, the access request to the gateway 12 comprises the provider address, and thus the verification query is a read-only query of the smart contract 20 deployed at the provider address on the distributed ledger 16.

The method 400 further comprises providing, at Step 404, response data. The response data is provided in response to the read-only verification query, and comprises the contract balance of the smart contract 20. In some embodiments, the response data may also comprise the commitment C stored in the smart contract 10.

The method 400 further comprises receiving, at Step 406, a secret, and then redeeming, at Step 408, the smart contract by submitting the secret to the smart contract. In some embodiments, submission of the secret may be accompanied by a zero-knowledge proof, which allows the submission of the secret without revealing an identity of the user device 14, enhancing privacy. Submission of the secret causes, in response to the secret satisfying the cryptographic commitment (described previously), the transfer of a transaction value to the provider account 22 and self-deletion of the smart contract. Self-deletion is also initiated if the contract balance is refunded to the user device, as described previously with reference to **Figure 4****.** Self-deletion comprises either self-destruction (explicit removal), where the smart contract 20 is deleted from the distributed ledger 16, or rendering the storage unusable (logical deletion), where the smart contract 20 remains deployed on the distributed ledger 16 but the storage or logic is made unusable. Self- deletion of the smart contract from the distributed ledger releases resources on the distributed ledger. Thus, by ensuring the smart contract 20 is deleted or disabled following redemption or refund, on-chain storage is conserved, and attack surfaces are reduced.

Returning to **Figure 5****,** the method 400 further comprises providing, at 410, the distributed ledger service. The service is provided to the user device, for example via the gateway, and may comprise providing data to the user device 14.

In some embodiments, the method 400 also comprises logging events performed by the smart contract 20, e.g. creation, redemption, and refund. The events are emitted by a smart contract 20 during the transaction, and written to a transaction receipt on-chain. The transaction receipt provides an immutable record of events performed by the smart contract, and is not readable by other smart contracts during execution. Such logging of events is relatively cheap, because the transaction receipt does not store the smart contract's state. The logged events can be indexed and correlated across distributed gateway nodes for auditing, compliance, replay of system behaviour and tracing of settlement flows across chains (in multi-chain embodiments, discussed later). Logging such events also provides tamper evident traceability of settlement outcomes, since the transaction receipt is an immutable record of events performed by the smart contract, and is not readable by other smart contracts, while remaining fully observable to off-chain systems (e.g. the gateway 12).

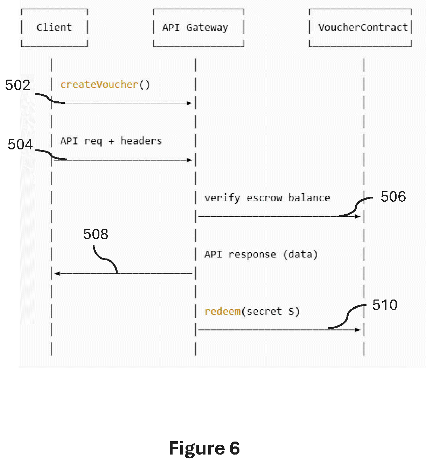

Turning to **Figure 6, Figure 6** shows a sequence diagram for creation, verification, redemption and self-destruction of a single use smart contract. In other words, **Figure 6** shows a sequence diagram for the various processes described above with reference to **Figures 3****,** **4** and **5****,** performed at the user device 14, the gateway 12, and the distributed ledger 16 respectively.

As illustrated, the sequence comprises (502) creating a smart contract and (504) sending an access request. These sequence steps are performed by the user device 14. As described previously, the smart contract request is provided to a smart contract factory, and the access request is sent to the gateway 12. The sequence then comprises (506) verifying the contract balance at the gateway. That is, the gateway 12 sends a query to the smart contract 20 on the distributed ledger 16 to determine the contract balance. The sequence then comprises (508) sending response data from the gateway 12 to the user device 14, and (510) redeeming the smart contract, which involves the gateway 12 submitting the secret to the smart contract 20 that is deployed on the distributed ledger 16. Redemption of the secret causes transfer of a transaction value to a provider account, access being granted to the user device 14, and deletion of the smart contract from the distributed ledger 16, as has been described in detail above.

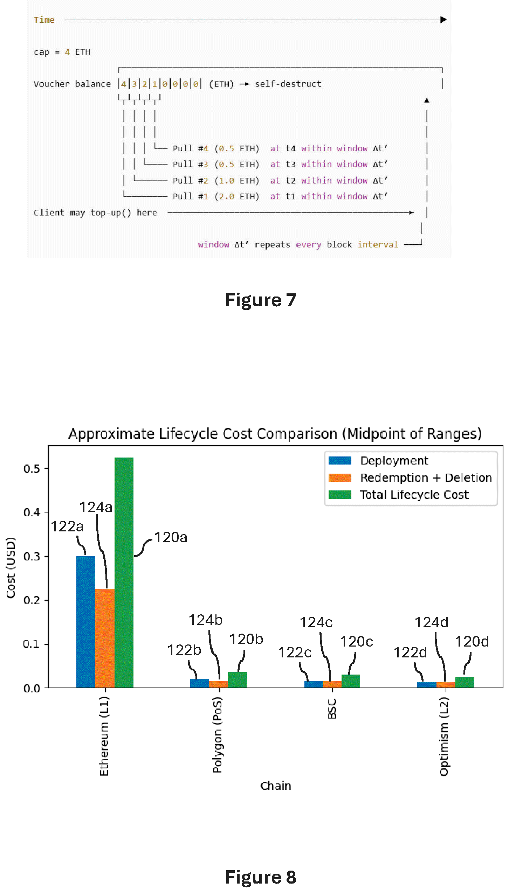

While the operation of the system 10 has been described for embodiments where the smart contract 20 is single use, in some embodiments a smart contract 20 may be multi-use. A multi-use smart contract 20 is useful for user devices that submit several access requests in quick succession. For example, in applications where multiple transactions are bundled into a single batch and submitted together. **Figure 7** is a schematic diagram showing an example redemption process for a multi-use smart contract 20. In the example illustrated in **Figure 7****,** the smart contract 20 is generated and deployed on the distributed ledger 16 with a contract balance equal to 4 units, however any number of units may be included. Redemption of the smart contract causes transfer of a transaction value to the provider of the service, where the transaction value is less than the contract balance. In this way, the smart contract 20 is partially redeemed. Transaction values are set by the provider, and may vary dependent on the access request, with more complex, computationally expensive requests having a high transaction value. **Figure 7** shows transaction values equal to 0.5 units, 1 unit, and 2 units.

When the smart-contract 20 is multi-use, the smart contract 20 also comprises a counter, configured to count how many units remain on the smart contract 20. To minimise on-chain storage use, the counter is packed into a single 32-bit slot and decremented via unchecked arithmetic. While a single-use smart contract executes self-deletion once the smart contract is redeemed or once a refund has been transferred, the multi-use smart contract 20 executes state deletion when the number of units remaining on the smart contract is equal to zero, determined by the counter. In the example illustrated in **Figure 7****,** self-deletion of the smart contract is executed after four partial redemptions of the smart contract. In some embodiments, the smart contract 20 may be configured to execute self-deletion when the number of units remaining on the smart contract 20 is below a predefined threshold. For example, if the transaction value is 2 units, the smart contract 20 may be configured to execute self-deletion when the number of units remaining on the smart contract is less than 2. In such embodiments, when the number of units remaining (determined by the counter) is less than 2 units, the remaining contract balance is refunded to the user device, and the smart contract executes self-deletion.

In some embodiments, the smart contract may comprise a streaming window. In such embodiments, the smart contract 20 is generated and deployed on the distributed ledger 16 with a maximum contract balance. Redemption of the smart contract causes a transfer of a micro-instalment to a provider of the service, where a value of the micro-instalment is significantly less than the maximum contract balance. The smart contract is partially redeemed (i.e., the transaction value transferred is less than the contract balance) at regular time intervals, e.g. every 100ms, during the streaming window, and partial redemption at these regular intervals continues until the stream ends. In embodiments comprising a streaming window, self-deletion of the smart contract only occurs once the contract balance is zero. If the contract balance expires before the streaming window ends, the smart contract executes self-deletion. Smart contracts comprising a streaming window enable high frequency request handling.

As described above, the system 10 for managing access to a distributed ledger service according to embodiments of the present invention uses low amounts of on-chain storage resources, since the smart contract 20 is automatically deleted from the distributed ledger 16 after expiry or redemption (both in single use and multi-use smart contracts). The system 10 according to embodiments of the present invention also requires reduced computational expense when processing access requests to a distributed ledger service. **Figure 8** is a graph showing the cost per access request on four different distributed ledgers: Ethereum, Polygon, BSC, and Optimism, using the method according to embodiments of the present invention. The total cost (120a, 120b, 120c, 120d) of an access request on each distributed ledger is shown, which is made up of the cost for deploying a smart contract on the distributed ledger (122a, 122b, 122c, 122d), and the cost for redeeming and deleting the smart contract from the distributed ledger (124a, 124b, 124c, 124d). The cost is related to the gas use, gas use being a measure of computational expense. Thus, a higher cost indicates higher computational expense. Although the gas use per request when using probabilistic micropayments and state channels are not shown, the gas use per request using the system according to embodiments of the present invention is reduced compared to the gas use per request when using probabilistic micropayments and state channels across all four of the distributed ledgers shown.

As shown in **Figure 8****,** for Ethereum, the total cost for an access request using the system according to embodiments of the present invention is approximately $0.55 (tests show this falls between $0.35 and $0.70). The total cost comprises approximately $0.30 for deployment and approximately $0.25 for redemption and deletion. These costs correspond to a gas use of approximately 24,000 gas, and 20,000 gas respectively, with a total gas use for the access request being approximately 44,000 gas. This is comparable to a single token transfer, and significantly lower than settlement mechanisms requiring probabilistic micropayments or a persistent channel state (as in state channels). Accordingly, the method of the present invention, for managing access to a distributed ledger service, has reduced computational expense compared to current methods.

When considering a multi-use smart contract 20, gas use measured over multiple access requests was reduced by two orders of magnitude compared with repeated single-use smart contracts. Therefore, a multi-use smart contract 20 further reduces computational expense associated with processing access requests and managing access to services on a distributed ledger 16.

The reduced gas use in embodiments of the present invention is possible because the smart contract 20 deletes after redemption (or expiry), which ensures that no long-term storage slots in the distributed ledger 16 remain occupied, reducing the global state burden on blockchain nodes. Accordingly, the system 10 according to embodiments of the present invention provides a significant improvement in storage efficiency relative to prior-art schemes that accumulate persistent balances or metadata.

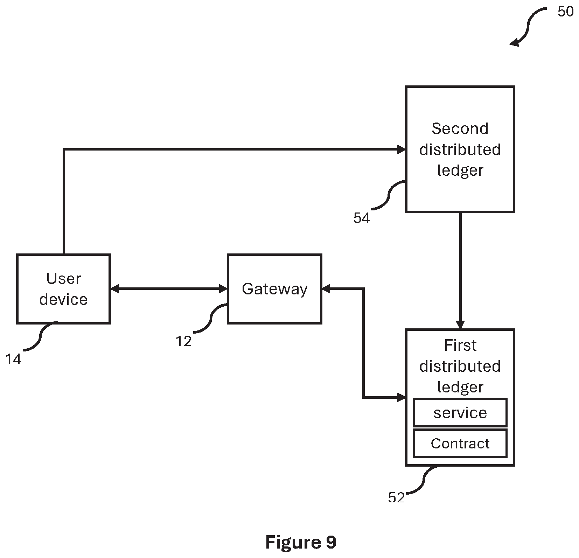

While the above description describes a system 10 for managing access to a distributed ledger comprising one distributed ledger 16, in alternative embodiments, a system for managing access to a distributed ledger may comprise two distributed ledgers configured to communicate. A system comprising two distributed ledgers in accordance with embodiments of the present invention, a cross-chain system, is described below with reference to **Figures 9** to **11****.**

Firstly, **Figure 9** is a block diagram showing a first cross-chain system 50 for managing access to a distributed ledger service on a first distributed ledger 52, in accordance with an alternative embodiment of the present invention. As illustrated in **Figure 9****,** the cross-chain system 50 comprises a user device 14 in communication with a gateway 12. The user device 14 and gateway 12 operate in the same way as described above, with reference to **Figures 1** to **4****.** The cross-chain system 50 also comprises a first distributed ledger 52 comprising a smart contract 20. The smart contract 20 is generated and deployed in the same way as described previously, and comprises a contract balance, a commitment C (the commitment being a function of a secret s generated by the user device 14), and a provider address for the provider account 22 providing the distributed ledger service. In some embodiments, the smart contract also comprises a validity period Δt. The smart contract 20 may be multi-use or single use, and may comprise a streaming window.

The cross-chain system 50 also comprises a second distributed ledger 54. The first and second distributed ledgers, 52, 54, may be any distributed ledger, for example Ethereum. The first and second distributed ledgers, 52, 54, are in communication via a cross-chain messaging protocol, for example LayerZero, or Wormhole.

In use, the user device 14 (or a software development kit (SDK) associated with the user device 14) sends a request to (calls) the smart contract factory 18 to create the smart contract 20 and deploy the smart contract on the first distributed ledger 52. The user device 14 then generates an access request, and sends the access request to the gateway 12, to request access to a distributed ledger service on the first distributed ledger 52. The steps of generating and deploying a smart contract 20 on the distributed ledger 52, and generating and sending an access request to the gateway 12 have been described previously with reference to **Figure 3****,** and the same method applies in the present embodiment. That is, the method performed by the user device 14 comprises the steps illustrated in **Figure 3****.** However, in the cross-chain embodiment, the access request does not comprise the secret s. The access request comprises only the address of the smart contract 20 on the first distributed ledger 52, and optionally the commitment.

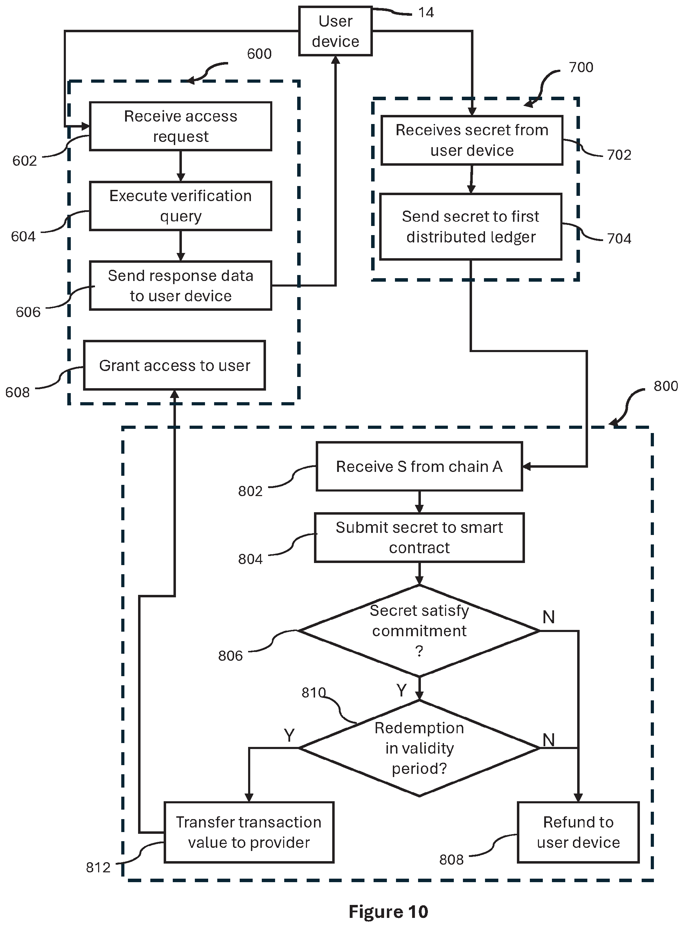

The access request is received by the gateway 12, and the gateway processes the request to manage access to the distributed ledger service on the first distributed ledger 52. The first and second distributed ledgers 52, 54, operate together to provide the distributed ledger service to the user device 14. These operations are described in detail with reference to **Figure 10****,** which is a flowchart showing the methods performed by the gateway 12, at the first distributed ledger 52, and at the second distributed ledger 54.

Considering firstly the method 600 performed at the gateway 12. The method 600 comprises receiving, at Step 602, the access request. As illustrated, the access request is received from the user device 14. The access request comprises the address of the smart contract on the first distributed ledger 52 and optionally, the commitment.

The method 600 then comprises executing, at Step 604, a verification request. The step of executing the verification request comprises performing a read-only query of the smart contract 20 on the first distributed ledger 52 to determine the contract balance (and, optionally, to determine if the commitment in the access request matches the commitment value stored in the smart contract), as was described previously with reference to **Figure 4****.** Once the access request is verified, the method 600 comprises sending, at Step 606, response data to the user device 14. The response data may comprise an indication that the access request is verified.

On receipt of the response data from the gateway 12, indicating that the access request is verified, the user device 14 submits the secret to the second distributed ledger 54. That is, the user device 14 submits the secret to a different distributed ledger to the distributed ledger comprising the smart contract 20. As illustrated in **Figure 10****,** the method 700 performed at the second distributed ledger 54 then comprises receiving, at Step 702, the secret from the user device 14, and then sending, at Step 704, the secret to the first distributed ledger 52. The secret may be sent via any appropriate cross-chain messaging protocol to the first distributed ledger 52.

Turning to the method 800 performed at the first distributed ledger 52, although not illustrated in **Figure 10** (as verification was described with reference to the method 600 performed by the gateway 12), the method 800 comprises receiving a verification query and providing response data. This process was described previously with reference to **Figure 5****.**

The method 800 then comprises receiving, at Step 802, the secret from the second distributed ledger 54. The method 800 further comprises submitting, at Step 804, the secret to the smart contract 20, determining, at Step 806, if the secret satisfies the commitment, and optionally, in embodiments where a validity period is specified in the smart contract 20, determining, at Step 808, if the secret was submitted in the validity period. Based on the determinations made at Steps 806 and 810, the method 800 comprises either refunding, at Step 808, the contract balance to the user device 14, or transferring, at Step 812, a transaction value to the provider account. The steps of submitting the secret, determining if the secret satisfies the commitment in the smart contract 20, determining if the secret was submitted within the validity period, refunding the contract balance, and transferring a transaction value (together referred to as redemption), were described previously with reference to **Figure 4****.** The description set out for these steps in **Figure 4** applies to the equivalent steps for the cross-chain embodiment of **Figure 10****.** While **Figure 4** describes the gateway 12 performing the steps relating to redemption of the smart contract, for the cross-chain system 50, the gateway 12 is not involved in redemption. In the cross-chain system 50, redemption is executed by the first distributed ledger 52, in response to receiving the secret from the second distributed ledger 54, as is shown in **Figure 10****.**

As shown in **Figure 10****,** once a transaction value is transferred, at Step 812, to the provider account, the gateway grants, at Step 608, the user device 14 access to the distributed ledger service associated with the provider account. After access to the distributed ledger service is granted to the user device 14 (Step 608) or after the contract balance is refunded to the user device 14 (Step 808), the smart contract 20 executes state deletion, releasing resources on the first distributed ledger 52. State deletion has been described previously, and so is not repeated.

Compared to the system 10 described in **Figures 1** to **5****,** where the secret is received from the gateway as part of the access request, in cross-chain embodiments of the present invention, the secret is received from a different distributed ledger. Due to the self-deletion of the smart contract 20 following redemption, the cross-chain embodiment also operates efficiently, with reduced gas use compared to typical methods for managing access to distributed ledger services.

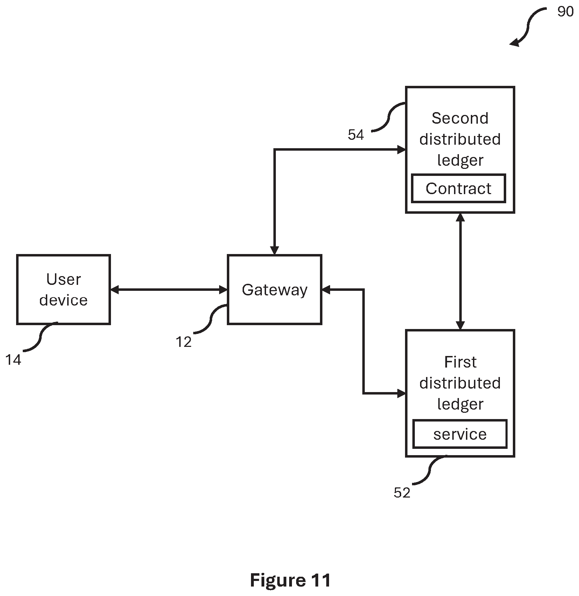

As described above, in the cross-chain embodiment described by **Figures 9** **and** **10****,** the smart contract 20 is deployed on the first distributed ledger 52 (performing the method 800), and the user device submits an access request to the gateway 12 to access a distributed ledger service on the first distributed ledger 52. In alternative cross-chain embodiments the smart contract 20 may be deployed on the second distributed ledger 54. An alternative embodiment of a cross-chain system is shown by the block diagram in **Figure 11****.** As illustrated, the alternative cross-chain system 90 according to embodiments of the present invention comprises a user device 14 in communication with a gateway 12, which is in turn in communication with a first distributed ledger 52 hosting a distributed ledger service and with a second distributed ledger 54. The first distributed ledger 52 is in communication with the second distributed ledger 54. Compared to the cross-chain system 50 described in **Figures 9** and **10****,** in the alternative cross-chain system 90, the smart contract 20 is generated and deployed on the second distributed ledger 54. That is, the smart contract 20 and the distributed ledger service are hosted on different distributed ledgers. Such a system decouples the service from the settlement transaction, allowing redemption to occur where gas is cheapest. For example, the second distributed ledger 54, comprising the smart contract, may be a distributed ledger associated with lower gas costs compared to the first distributed ledger which hosts the distributed ledger service.

The operation of the alternative cross-chain system 90 is similar to the first cross-chain system 50 described previously. Briefly, the gateway 12 receives an access request from a user device (the access request comprising the address of the smart contract on the second distributed ledger 54 and optionally, the commitment), executes a verification query (comprising performing a read-only query of the smart contract 20 on the second distributed ledger 54), and sends response data to the user device 14. Each of these steps have been described in detail previously with reference to **Figure 4****,** and the same description applies to the cross-chain system 90 illustrated in **Figure 11****.**

On receipt of the response data from the gateway 12, indicating that the access request is verified, the user device 14 submits the secret to the first distributed ledger 52. The first distributed ledger 52, however, does not comprise the smart contract. Thus, the first distributed leger 52 sends the secret s to the second distributed ledger 54 (i.e., the distributed ledger with the smart contract 20). The secret may be sent via any appropriate cross-chain messaging protocol, for example LayerZero, or Wormhole.

The second distributed ledger 54 then redeems the smart contract 20. That is, the method 800 of **Figure 10** is performed at the second distributed ledger 54. The method 800 was described in detail with reference to **Figure 10****,** and the same description applies to the alternative cross-chain system 90, with the only difference being where the method is performed. In the present cross-chain system 90, the method 800 occurs at the second distributed ledger 54, and the second distributed ledger 54 receives the secret from the first distributed ledger 52, while in the first cross-chain system 50, described with reference to **Figures 9** and **10****,** the method 800 is performed at the first distributed ledger 52, with the secret being received from the second distributed ledger.

Following transfer of the transaction value to the provider account in the alternative cross-chain system 90, the gateway 12 grants the user device 14 access to the distributed ledger service associated with the provider account, in the same way as described for the first cross-chain system 50 (see **Figure 10****).** Again, as for the first cross-chain system 50, after access to the distributed ledger service is granted to the user device 14 (Step 608) or after the contract balance is refunded to the user device 14 (Step 808), the smart contract 20 executes state deletion, releasing resources on the second distributed ledger 54.

In the alternative cross-chain embodiments, the service (i.e., the distributed ledger service on the first distributed ledger 52) is decoupled from redemption of the smart contract, which occurs on the second distributed ledger 54. When accessing a service on a more expensive distributed ledger (e.g. Ethereum), the decoupling allows redemption of the smart contract to occur on a different, cheaper distributed ledger (e.g. BSC, shown in **Figure 8****).** In this way, the gas use associated with accessing a distributed ledger service on a more expensive distributed ledger is reduced.

It will be appreciated that various changes and modifications can be made to the present invention without departing from the scope of the present application.

## Claims

1. A distributed ledger comprising a smart contract, the smart contract comprising:
a cryptographic commitment, the cryptographic commitment being a function of a secret; and
a contract balance;
wherein the distributed ledger is configured to:
receive a read only verification query to return the value of the contract balance;
provide response data, the response data comprising the value of the contract balance;
receive the secret;
redeem the smart contract by submitting the secret to the smart contract, submission of the secret causing, in response to the secret satisfying the cryptographic commitment, the transfer of a transaction value to a provider account and self-deletion of the smart contract; and
provide access to a distributed ledger service, the distributed ledger service being associated with the provider account,
wherein self-deletion of the smart contract causes release of resources on the distributed ledger.

2. The distributed ledger of Claim 1 wherein the distributed ledger is Ethereum.

3. The distributed ledger of Claim 1 or 2, wherein the distributed ledger is configured to receive the secret from a second distributed ledger via a cross-chain messaging protocol.

4. The distributed ledger of Claim 1 or 2, wherein the distributed ledger is configured to receive the secret from a gateway associated with the distributed ledger or a user device.

5. The distributed ledger of any of Claims 1 to 4, wherein the smart contract comprises a validity period.

6. The distributed ledger of Claim 5, wherein to redeem the smart contract, the distributed ledger is configured to cause the transfer of the transaction value to the provider account in response to the secret being submitted within the validity period.

7. The distributed ledger of Claim 5 or 6, wherein the distributed ledger is configured to cause the transfer of the contract balance to a user account when the secret is not submitted within the validity period.

8. The distributed ledger of any of Claims 1 to 7, wherein the smart contract is deployed on the distributed ledger using an opcode or mechanism that enables deterministic calculation of an address of the smart contract.

9. The distributed ledger of any of Claims 1 to 8, wherein the distributed ledger is configured to log events carried out by the smart contract.

10. A gateway for managing access to a distributed ledger service on a distributed ledger, the distributed ledger service being associated with a provider account, wherein the gateway is configured to:
receive, from a user device, a request for access to the distributed ledger service, the request comprising:
a secret; and
an address of a smart contract deployed on the distributed ledger, the smart contract comprising a cryptographic commitment, the cryptographic commitment being a function of the secret, and a contract balance, wherein the smart contract is configured to self-delete after redemption of the smart contract;
execute a read-only verification query of the smart contract to determine the contract balance;
in the event that the value of the contract balance is greater than or equal to a threshold value set by the provider account, redeem the smart contract by submitting the secret to the smart contract, submission of the secret causing, in response to the secret satisfying the cryptographic commitment in the smart contract, the transfer of a transaction value to the provider account and self-deletion the smart contract; and
grant the user device access to the distributed ledger service.

11. The gateway of Claim 10, wherein the request comprises a cryptographic commitment, and wherein the gateway is configured to execute the read-only verification query to determine if the cryptographic commitment in the request matches the cryptographic commitment in the smart contract.

12. The gateway of Claim 10 or 11, wherein the transaction value is equal to the contract balance.

13. The gateway of Claim 10 or 11, wherein the transaction value is less than the contract balance, and redemption comprises a plurality of redemption messages until the contract balance is zero or less than the transaction value, the smart contract being configured to self-delete once the contract balance is zero or less than the transaction value.

14. The gateway of any of Claims 10 to 13, wherein the smart contract comprises a validity period, and wherein the gateway is configured to:
execute the read-only verification query to determine that the validity period has not expired; and
redeem the smart contract in response to submitting the secret within the validity period.

15. The gateway of Claim 14, wherein the gateway is configured to block access to the distributed ledger service in response to the secret not being submitted within the validity period.

16. The gateway of Claim 14 or 15, wherein the smart contract is configured to cause a transfer of the transaction value to a user account associated with the user device in response to the secret not being submitted within the validity period.

17. The gateway of any of Claims 14 to 16, wherein the gateway is configured to select the validity period based on a service level agreement tier.

18. The gateway of any of Claims 10 to 17, wherein the cryptographic commitment is a hash of the secret under a hash function selected from Keccak-256, SHA-3, Poseidon, or BLAKE3.

19. The gateway of any of Claims 10 to 18, wherein the gateway is configured to send response data to the user device in response to the verification.

20. A gateway for managing access to a distributed ledger service on a first distributed ledger, the distributed ledger service being associated with a provider account, wherein the gateway is configured to:
receive, from a user device, a request for access to the distributed ledger service, the request comprising:
an address of a smart contract deployed on the first distributed ledger, the smart contract comprising a cryptographic commitment, the cryptographic commitment being a function of a secret; and
a contract balance,
wherein the smart contract is configured to self-delete after redemption of the smart contract;
execute a read-only verification query of the smart contract to determine that the value of the contract balance is greater than or equal to a threshold value set by the provider account;
provide response data to the user device, the response data comprising confirmation of verification, wherein the response data causes the user device to submit a secret to a second distributed ledger service; and
grant the user device access to the distributed ledger service in response to redemption of the smart contract, wherein the smart contract is redeemed by submission of the secret by the second distributed ledger to the smart contract on the first distributed ledger, submission of the secret causing, in response to the secret satisfying the cryptographic commitment in the smart contract, the transfer of a transaction value to the provider account and self-deletion the smart contract.

21. A gateway for managing access to a distributed ledger service on a first distributed ledger, the distributed ledger service being associated with a provider account, wherein the gateway is configured to:
receive, from a user device, a request for access to the distributed ledger service, the request comprising:
an address of a smart contract deployed on a second distributed ledger, the smart contract comprising a cryptographic commitment, the cryptographic commitment being a function of a secret; and
a contract balance,
wherein the smart contract is configured to self-delete after redemption of the smart contract;
execute a read-only verification query of the smart contract to determine that the value of the contract balance is greater than or equal to a threshold value set by the provider account;
provide response data to the user device, the response data comprising confirmation of verification, wherein the response data causes the user device to submit a secret to the first distributed ledger; and
grant the user device access to the distributed ledger service in response to redemption of the smart contract, wherein the smart contract is redeemed by submission of the secret by the first distributed ledger to the smart contract on the second distributed ledger, submission of the secret causing, in response to the secret satisfying the cryptographic commitment in the smart contract, the transfer of a transaction value to the provider account and self-deletion the smart contract.

22. A system comprising the distributed leger according to any of Claims 1 to 9 and the gateway according to any of Claims 10 to 21.

23. A method of operating a distributed ledger, the distributed ledger comprising a smart contract, the smart contract comprising:
a cryptographic commitment, the cryptographic commitment being a function of a secret; and
a contract balance,
the method comprising
receiving a read only verification query to return the value of the contract balance;
providing response data, the response data comprising the value of the contract balance;
receiving a secret;
redeeming the smart contract by submitting the secret to the smart contract, submission of the secret causing, in response to the secret satisfying the cryptographic commitment, the transfer of a transaction value to a provider account and self-deletion of the smart contract; and
providing access to a distributed ledger service, the distributed ledger service being associated with the provider account,
wherein self-deletion of the smart contract causes release of resources on the distributed ledger.

24. A method of operating a gateway configured to manage access to a distributed ledger service, the distributed ledger service being associated with a provider account, wherein the method comprises:
receiving, from a user device, a request for access to the distributed ledger service, the request comprising:
a secret; and
an address of a smart contract deployed on the distributed ledger, the smart contract comprising a cryptographic commitment, the cryptographic commitment being a function of the secret, and a contract balance, wherein the smart contract is configured to self-delete after redemption of the smart contract;
executing a read-only verification query of the smart contract to determine the contract balance;
in the event that the value of the contract balance is greater than or equal to a threshold value set by the provider account, redeeming the smart contract by submitting the secret to the smart contract, submission of the secret causing, in response to the secret satisfying the cryptographic commitment, the transfer of a transaction value to the provider account and self-deletion of the smart contract; and
granting the user device access to the distributed ledger service.

25. A smart contract for deployment on a distributed ledger, the smart contract comprising:
a cryptographic commitment, the cryptographic commitment being a function of a secret; and
a contract balance,
wherein the smart contract is redeemed by submitting the secret to the smart contract, submission of the secret causing, in response to the secret satisfying the cryptographic commitment, the transfer of a transaction value to a provider account and self-deletion of the smart contract,
wherein self-deletion of the smart contract causes release of resources on the distributed ledger.

26. A method of configuring a smart contract for deployment on a distributed ledger, the method comprising:
generating a secret;
determining a cryptographic commitment, wherein the cryptographic commitment is a function of the secret;
submitting a request to a smart contract factory to deploy a smart contract on the distributed ledger, wherein the request comprises:
the cryptographic commitment;
an address of a provider of a distributed ledger service; and
a contract balance,
wherein in response to the request, the smart contract factory deploys the smart contract on the distributed ledger, the smart contract comprising the cryptographic commitment and the contract balance,
wherein the smart contract is redeemed by submitting a secret to the smart contract, submission of the secret causing, in response to the secret satisfying the cryptographic commitment, the transfer of a transaction value to the provider and self-deletion of the smart contract,
wherein self-deletion of the smart contract causes release of resources on the distributed ledger.
